Europäisches Patentamt

European Patent Office

Office européen des brevets

(11) Numéro de publication : **0 374 000 B1**

(19)

(12) # FASCICULE DE BREVET EUROPEEN

(45) Date de publication du fascicule du brevet :
17.02.93 Bulletin 93/07

(51) Int. Cl.⁵ : **C03C 17/34, B60J 1/00**

(21) Numéro de dépôt : **89403357.0**

(22) Date de dépôt : **05.12.89**

(54) **Vitrage de protection solaire monolithique.**

(30) Priorité : **08.12.88 FR 8816112**

(43) Date de publication de la demande :
**20.06.90 Bulletin 90/25**

(45) Mention de la délivrance du brevet :
**17.02.93 Bulletin 93/07**

(84) Etats contractants désignés :
**AT BE CH DE ES FR GB IT LI LU NL SE**

(56) Documents cités :
**US-A- 4 690 871**
**"4EME COLLOQUE INTERNATIONAL SUR LES PLASMAS ET LA PULVERISATION CATHODIQUE", Nice, 13-17 septembre 1982, pages 385-395; S.R.REINECK et al.: "High rate sputtering for production of modern architectural glass coating"**

(73) Titulaire : **SAINT-GOBAIN VITRAGE INTERNATIONAL**
"Les Miroirs" 18, avenue d'Alsace
**F-92400 Courbevoie (FR)**

(72) Inventeur : **Wuest, Isabelle**
**11, Passage de la Main d'Or**
**F-75011 Paris (FR)**
Inventeur : **Anderson, Charles-Edouard**
**39, rue du 22 Septembre**
**F-92400 Courbevoie (FR)**
Inventeur : **Tabare, Jacques**
**2, rue de la Garannière**
**F-95590 Presles (FR)**

(74) Mandataire : **de Toytot, Robert et al**
**SAINT-GOBAIN RECHERCHE 39 quai Lucien Lefranc B.P. 135**
**F-93304 Aubervilliers Cédex (FR)**

EP 0 374 000 B1

Jouve, 18, rue Saint-Denis, 75001 PARIS

## Description

L'invention concerne un vitrage de protection solaire revêtu d'une couche mince à base de carbure de titane. Il est plus particulièrement destiné à équiper les automobiles.

On connaît de nombreux usages pour des vitrages qui diminuent la transmission du rayonnement solaire. Il s'agit de limiter l'énergie pénétrant dans les locaux ou dans les véhicules pour éviter un échauffement excessif et/ou pour limiter la consommation d'énergie nécessaire à la climatisation.

Deux moyens sont utilisés pour atteindre ce but, soit l'utilisation de verres colorés dans la masse par l'adjonction d'oxydes métalliques divers à la composition verrière, soit le dépôt de couches minces, absorbantes ou réfléchissantes à la surface du verre.

Il s'agit d'obtenir une couche suffisamment absorbante pour agir sur le rayonnement solaire, et assez peu réfléchissante pour éviter la gêne et rester conforme aux règlements - en particulier dans le cas des vitrages automobiles. On désire de plus que cette couche soit suffisamment résistante aux agressions chimiques ou mécaniques pour pouvoir être utilisée seule sans être protégée (comme ce serait le cas à l'intérieur d'un vitrage feuilleté ou multiple).

Il existe dans l'automobile une demande pour des vitrages de faible épaisseur, mais très absorbants. En particulier dans les automobiles modernes, la surface vitrée est devenue très importante et, par ailleurs, pare-brise et lunettes arrière sont de plus en plus inclinés. Un corollaire de cette situation est une surchauffe des habitacles lorsqu'ils sont exposés au soleil et un inconfort qui s'accroît. C'est pourquoi, pour améliorer le confort sans diminuer la visibilité nécessaire à une conduite sûre, on envisage d'avoir, sur un même véhicule, des vitrages dont la transmission lierait décroissante par paliers du pare-brise (le plus transparent) aux vitrages latéraux avant puis aux vitrages latéraux arrière et enfin à la lunette arrière (la moins transparente), respectant ainsi l'exigence de visibilité maximum au travers du pare-brise (transmission lumineuse supérieure à 75 % d'après les réglementations) mais renforçant le traitaient anti-solaire sur les autres vitrages pour lesquels l'exigence en transmission est moins contraignante). Comme par ailleurs, pour des raisons de poids, on désire utiliser des verres dont l'épaisseur soit la plus faible possible, on aurait besoin dans le cas d'un verre coloré dans la masse, d'une part d'une coloration très dense et d'autre part de degrés de coloration différents (quatre dans l'exemple choisi ci-dessus). Ces deux exigences sont très difficiles à réaliser dans la pratique. Une forte absorption du rayonnement solaire a pour corollaire une masse vitreuse dans le four de fusion de verre, elle-même très absorbante pour le rayonnement des flammes destinées à chauffer le bain de verre. Cette caractéristique modifie très sensiblement le comportement thermique du verre en fusion et particulièrement les courants de convexion, déterminants dans l'élaboration d'un verre de bonne qualité. C'est pourquoi on limite en général la densité de la coloration du verre à des valeurs assez faibles. D'un autre côté, la multiplication des coefficients d'absorption intrinsèques donc la multiplication des couleurs de verre obtenues grâce à des ajouts de colorants dans le four de fusion qui serait nécessaire pour faire varier l'absorption sans variations d'épaisseur ne serait applicable industriellement que si les quantités consommées le justifiaient : ce n'est pas le cas en général. La méthode traditionnelle qui consiste à changer les caractéristiques optiques en agissant sur l'épaisseur n'est pas souhaitable car, pour des raisons de poids, on désire avoir l'épaisseur de verre - trempé en général, sauf pour le pare-brise - qui soit la plus mince possible, la limite étant imposée pour des raisons de tenue mécanique. Par ailleurs, les inconvénients qu'entraînent des stocks importants sont peu différents de ce qu'ils sont dans le cas de verres de composition différents.

L'utilisation de couches minces absorbantes, éventuellement déposées sur un verre lui-même absorbant, permet en revanche de stocker des quantités limitées de verre de base, l'opération de diversification de la teinte se faisant sur le produit transformé dans une dernière phase de production.

Les techniques de dépôt de couches minces sous vide utilisant la pulvérisation cathodique sont bien connues. On connaît en particulier celles qui s'effectuent en présence d'un champ magnétique qui multiplient les chocs des ions sur la cible et accélèrent le dépôt. C'est par exemple le brevet DE 24 63 431 C2 qui présente un tel procédé utilisant une cible plane et le brevet US 4 116 806 qui utilise une cible en forme de courroie.

De même on connaît les techniques de pulvérisation cathodique réactive qui permettent d'obtenir une couche mince en faisant réagir le matériau de la cible avec les gaz du plasma, le brevet US 3 907 660 présente ainsi une telle méthode pour le dépôt d'oxide métallique sur du verre.

Parmi les couches minces absorbantes, susceptibles d'être utilisées nues c'est-à-dire sans protection sur un vitrage, on connaît les nitrures, carbures ou siliciures des métaux des groupes IV, V, ou VI de la classification périodique. Le brevet français FR 2 104 813 présente en particulier des exemples de nitrures de chrome, de molybdène, des carbures de chrome, des carbures mixtes de chrome et de titane et des siliciures divers. Ces couches sont déposées par différentes méthodes telles que pulvérisation cathodique en radio fréquence à partir de cibles constituées du même matériau ou, dans le cas des nitrures, pulvérisation cathodique réactive à partir d'une cible faite du métal concerné.

Ces couches agissent sur le rayonnement solaire aussi bien par absorption que par réflexion mais leur intérêt comme couches destinées à un vitrage automobile réside dans une réflexion relativement faible. Cependant pour être utilisables dans une automobile, il faut que la résistance à la rayure de ces couches soit grande, car toute rayure sera visible aussi bien en lumière réfléchie, par exemple lorsque l'on regarde une automobile de l'extérieur, qu'en lumière transmise, lorsque, de l'intérieur de l'automobile, on observe le paysage au travers d'une glace latérale par exemple. En effet si une couche très absorbante subit une rayure, à l'emplacement de la rayure, sa transmission est fortement augmentée pour éventuellement atteindre localement celle du verre sans couche, ce qui crée un défaut d'aspect intolérable. Ce double point de vue nécessite une couche particulièrement résistante à l'abrasion.

La demanderesse a donc cherché à disposer d'une couche très résistante à l'abrasion, elle a eu l'idée de choisir une couche constituée d'un matériau sélectionné parmi ceux qui sont connus pour avoir, en masse, une très bonne résistance à l'abrasion. Elle a alors étudié le procédé pour réaliser cette couche, puis, elle a cherché à améliorer encore ses performances de résistance à l'abrasion.

La présente invention a pour objet un vitrage équipé d'une telle couche améliorée ainsi que son procédé de préparation et l'application à un système particulier de vitrage automobile.

Le vitrage de protection solaire de l'invention est revêtu d'une couche mince à base de carbure de titane recouverte d'une surcouche d'oxyde d'indium-étain.

Dans une variante de l'invention, le verre support de la couche est un verre coloré dans la masse. Ce verre support peut également être trempé.

Dans une autre variante, le vitrage selon l'invention a une couche d'oxyde d'indium-étain dont l'épaisseur est inférieure à 50 nm, mais celle-ci est de préférence de l'ordre de 15 nm.

De même, la couche de carbure de titane a une épaisseur comprise entre 8 et 50 nm et de préférence d'environ 15 nm ou, dans une autre variante, de l'ordre de 35 nm.

L'invention concerne également un procédé pour préparer une couche de carbure de titane recouverte d'une couche d'oxyde d'indium-étain, où la couche de carbure de titane est obtenue par pulvérisation cathodique réactive à l'aide d'une cible de titane en présence d'une atmosphère contenant un hydrocarbure.

La pulvérisation cathodique est de préférence du type renforcé par champ magnétique et l'hydrocarbure est avantageusement du méthane, il est dilué dans de l'argon dans une proportion comprise entre 8 et 20 % et, de préférence 14 %.

Dans le procédé selon l'invention, la puissance appliquée à la cathode lors du dépôt du carbure de titane est comprise entre 1 et 2 W/cm².

L'invention prévoit également que le dépôt de la couche d'oxyde d'indium-étain soit effectué immédiatement après le dépôt de carbure de titane, sans retour à l'atmosphère.

Il est également du domaine de l'invention d'appliquer les vitrages précédents à la réalisation d'un système de vitrage pour véhicule dans lequel la transmission décroît par étapes d'un vitrage à l'autre, de l'avant vers l'arrière du véhicule, la variation de transmission est ici obtenue par des couches de carbure de titane de plus ou moins grande épaisseur ou par variation de l'épaisseur du verre.

Grâce à l'invention, on dispose d'une couche qui permet d'adapter la transmission des vitrages aux besoins en particulier de l'industrie automobile et, celà sans modifier sensiblement l'aspect du vitrage obtenu. En effet, comme on place le plus souvent la couche selon l'invention, sur la face destinée à être la face interne du vitrage automobile et que cette couche est de couleur légèrement bleutée en réflexion, elle ne modifie que très peu l'aspect du vitrage en réflexion et permet ainsi de résoudre le problème des vitrages automobiles à transmission décroissant par paliers et ayant cependant une homogénéité d'aspect.

La très grande dureté obtenue grâce à l'invention permet sans crainte d'utiliser le vitrage revêtu de la couche TiC-ITO en vitrage monolithique et donc, dans des conditions particulièrement économiques.

D'autres avantages de l'invention apparaîtront à la lecture de la description qui va suivre. Les figures qui illustrent la description sont au nombre de quatre :

- la figure 1 présente le schéma d'une automobile équipée de vitrages dont la transmission varie par paliers de l'avant vers l'arrière du véhicule,
- la figure 2 montre un verre revêtu d'une couche de carbure de titane,
- la figure 3 présente un vitrage selon l'invention où la couche de carbure de titane est recouverte d'une couche d'oxyde d'indium-étain,
- la figure 4 restitue les courbes de transmission de deux vitrages conformes à l'invention.

L'explication détaillée des figures et la description qui suivent permettront de comprendre le fonctionnement et les avantages de l'invention.

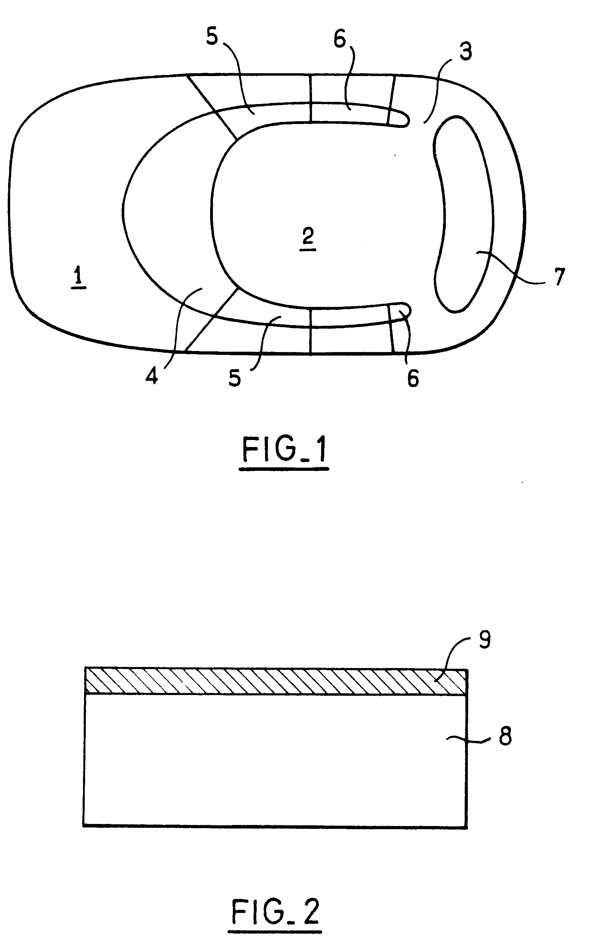

Le véhicule automobile 1 représenté à la figure 1 comporte un habitacle avec son toit 2, des parties opaques 3 et des parties transparentes 4, 5, 6 et 7.

Le but de l'invention est de permettre d'équiper facilement une automobile de vitrages dont la transmission énergetique $T_E$ pour le rayonnement solaire décroisse par paliers du pare-brise 4 à la lunette arrière 7 en passant par les glaces latérales avant 5 puis par les latéraux mobiles ou fixes 6.

La transmission énergétique s'exprime par la formule :

$$T_E = \frac{\int_{0,2}^{2,5} S_\lambda \, T_\lambda \, d\lambda}{\int_{0,2}^{2,5} S_\lambda \, d\lambda}$$

où $\lambda$ est la longueur d'onde du rayonnement exprimée en $\mu$m, $S_\lambda$ la caractéristique du rayonnement solaire au niveau du sol et $T_\lambda$ la transmission lumineuse spectrale du vitrage mesurée sous incidence normale.

Pour des raisons de confort, on souhaite évidemment que la transmission énergétique des vitrages d'une automobile soit la plus faible possible. On limite ainsi la quantité d'énergie qui pénètre à l'intérieur d'un véhicule en été, ce qui limite également l'échauffement. On a ainsi proposé que le pare-brise 4 ait une transmission énergétique limitée à 0,60, les latéraux avant 5, à 0,50, les latéraux arrières 6, à 0,45, et la lunette arrière 7, à 0,30. Ces limites proposées tiennent compte des exigences de transmission lumineuse $T_L$ qui sont imposées par les normes qui concernent la construction et la conduite des véhicules automobiles. $T_L$ s'exprime classiquement par une formule analogue à celle de la transmission énergétique, mais qui tient compte comme source lumineuse, d'une lampe à filament de tungstène et comme détecteur de l'oeil humain adapté à la vision diurne. Il est nécessaire de tenir compte de $T_L$ car, le maximum de l'énergie solaire se trouve dans la partie visible du spectre et il est impossible de diminuer sensiblement la transmission globale d'énergie sans agir sur la lumière visible. Ces transmissions énergétiques évoquées ci-dessus - qui n'ont qu'une valeur indicative - constituent un compromis entre une visibilité acceptable et le meilleur confort possible.

Sur la figure 2, on a représenté un verre flotté classique 8 avec une composition silico-sodo-calcique traditionnelle, son épaisseur est 3,0 mm. On a déposé sur ce verre une couche très absorbante en carbure de titane 9. La technique de dépôt qui sera décrite plus loin est la pulvérisation cathodique réactive. Un tel échantillon sert de référence, en particulier pour les essais d'abrasion.

Les essais d'abrasion sont effectués à l'aide de meules faites de poudre abrasive noyée dans un élastomère. La machine est fabriquée par la Société Taber Instrument Corporation aux Eats-Unis. Il s'agit du modèle 174, "Standard Abrasion Tester" les meules sont des CS10F chargées de 500 grammes. Chaque échantillon est soumis à 1000 rotations, on mesure sa transmission lumineuse globale $\tau$ à l'aide d'une sphère intégrante avant ($\tau_o$) et après ($\tau_{1000}$) abrasion. Une troisième valeur sert de référence : la transmission du verre sans couche : $\tau_v$ - l'usure à l'abrasion est mesurée par la grandeur U :

$$U = \frac{\tau_{1000} - \tau_o}{\tau_v - \tau_o}$$

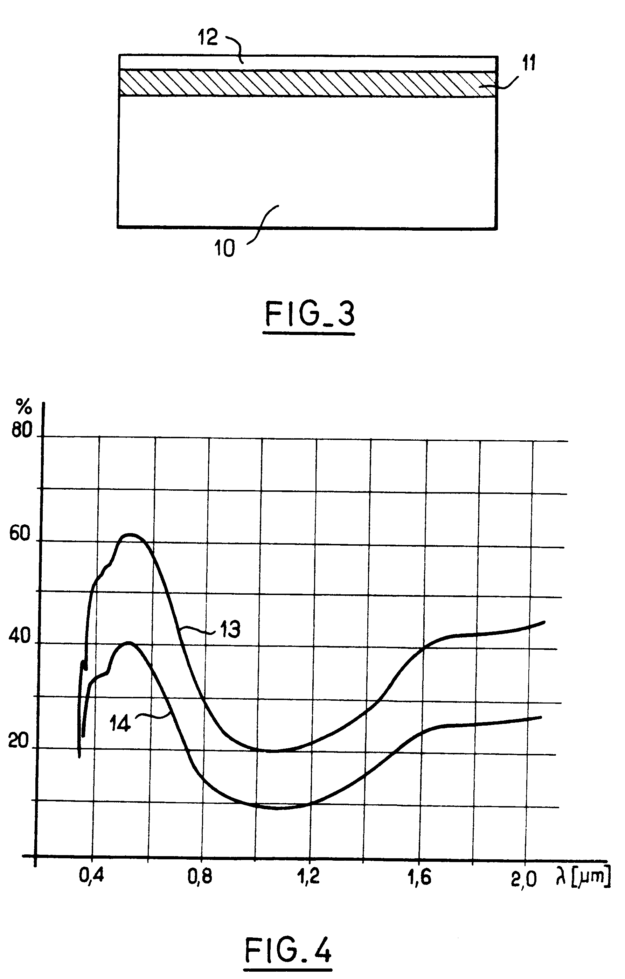

La figure 3 présente un verre conforme à l'invention, c'est-à-dire que le verre support 10, qui est en général coloré, est couvert d'une couche très absorbante 11, en carbure de titane identique à la couche de la figure 2 mais qu'une surcouche 12 constituée d'oxyde d'indium-étain a été déposée par l'une des méthodes de pulvérisation cathodique qui sera décrite plus loin. A la différence de la glace claire de la figure 2 le support des couches selon l'invention est de préférence un verre flotté dont la composition est celle d'un verre à glace silico-sodo-calcique traditionnel mais qui a été coloré en vert à l'aide de fer et de cobalt. La quantité totale de fer, ramenée à $Fe_2O_3$ est par exemple de 0,80 % en poids et la proportion d'ions ferreux par rapport au fer total est de 0,25. La quantité pondérale de cobalt (CoO) est alors de 4 ppm. L'épaisseur du verre est ici de 3,15 mm.

Sur la figure 4, on présente des exemples de réalisation conformes à l'invention. La courbe de transmission 13 est celle d'un vitrage qui pourrait convenir comme vitrage latéral arrière. Son mode d'obtention est décrit dans l'exemple 4 ci-dessous. De même la courbe 14 correspond au vitrage de l'exemple 6, il pourrait avantageusement constituer la lunette arrière d'un véhicule automobile.

Dans les exemples qui suivent, on présente un certain nombre de réalisations qui montreront comment mettre en oeuvre l'invention et qui permettront d'apprécier ses avantages.

### Exemple 1

Le matériau de départ est un verre flotté clair d'épaisseur 3,0 mm. On découpe un échantillon de dimensions 10 x 10 cm. Il est lavé et séché. On l'introduit dans l'installation de pulvérisation cathodique de laboratoire. Celle-ci est équipée d'une cathode pourvue d'aimants. La cible est constituée de titane métallique. Les dimensions de celle-ci sont de 9 x 21 cm. La cathode est fixe et l'échantillon, porté par un carrousel d'un diamètre de 35 cm passe devant la cible. La distance minimum entre l'échantillon et la cible est de 10 cm. Une gestion de gaz permet de faire circuler dans l'enceinte divers gaz avec des débits définis.

De manière classique, on procède à un effluvage pour débarrasser l'échantillon des résidus organiques qui pourraient subsister, on effectue ensuite un dépôt réactif de TiC. Après avoir fait un vide de $8\ 10^{-3}$, Torr, on introduit de l'argon avec un débit de 17,2 cm³/mn (conditions normales de température et de pression - CNTP) puis du méthane ($CH_4$) avec un débit de 2,8 cm³/mn CNTP. Lorsque la pression s'est stabilisée dans l'enceinte on fait tourner le carrousel et on applique sur la cible une tension de 360 volts. Dans les conditions de l'expérience, la puissance s'établit alors à 290 watt soit 1,5 watt/cm² de cible. On laisse alors le dépôt s'effectuer pendant 45 secondes.

Après avoir sorti l'échantillon de l'enceinte, on le mesure et l'on constate que sa transmission $T_L$ est de 0,51, l'épaisseur de la couche étant de 19 nm. Cet échantillon va être alors soumis à un test d'abrasion. Après 1000 tours la transmission $\tau_{1000}$ a augmenté jusqu'à 0,66. La valeur de U est :

$$U = \frac{\tau_{1000} - \tau_o}{\tau_v - \tau_o}$$

comme $\tau_v$ est de 0,91, on trouve U = 0,38.

### Exemple 2

On conduit l'essai ici sur la même installation que pour l'exemple 1. La première phase est exactement identique mais on a prévu d'équiper l'installation d'une deuxième cathode identique à la première, mais pourvue d'une cible frittée en ITO céramique dont le rapport pondéral In/Sn est de 90/10. Immédiatement après le dépôt de TiC dans les mêmes conditions et donc avec la même épaisseur que dans l'exemple 1, on évacue le mélange Ar-$CH_4$ puis l'on introduit un mélange argon-oxygène dans le rapport de débits 17/3. Après stabilisation, la cathode est portée à une tension de 290 volts. On procède au dépôt jusqu'à l'obtention d'une couche d'ITO d'épaisseur 20 nm.

Après la sortie de l'échantillon de l'enceinte, on procède à l'essai d'abrasion. Mais cette fois, l'on constate avec surprise que la résistance de la couche à l'abrasion s'est très nettement améliorée : l'"usure" U est en effet, ici de 0,11 ce qui est très surprenant, en effet le carbure de titane est connu pour sa bonne résistance à l'usure, on l'utilise ainsi pour améliorer les performances des outils en acier, et il est surprenant qu'il suffise de recouvrir une couche de carbure de titane d'une couche d'épaisseur voisine en ITO pour que les performances soient encore nettement améliorées (0,11 au lieu de 0,38).

### Exemple 3

Le verre de base et les conditions expérimentales sont les mêmes que dans l'exemple 2 mais cette fois, la durée du dépôt d'ITO a été augmentée jusqu'à fournir une épaisseur de 32 nm. Après essai à l'abrasion, on constate que l'échantillon qui avait avant abrasion une transmission $\tau_o$ qui était de 0,55 possède, après 1000 tours d'abrasion, une transmission $\tau_{1000}$ de 0,57. On calcule ainsi une "usure" U = 0,06 qui est de nouveau pratiquement diminuée de moitié par rapport à l'exemple précédent.

Les trois exemples ci-dessus permettent de mettre en évidence la surprenante efficacité d'ITO en couches minces pour améliorer la résistance à l'abrasion d'un produit, qui, en masse, est déjà réputé pour son bon comportement à la rayure : le carbure de titane.

Les exemples qui suivent permettront de voir comment les couches selon l'invention à tenue à l'abrasion renforcée - peuvent être utilisées seules, sans protection, sur la face interne d'un vitrage automobile et comment elles apportent une solution au problème du confort d'été d'une automobile lorsqu'elles sont déposées sur des verres colorés.

### Exemple 4

On utilise pour le dépôt, une installation de pulvérisation cathodique analogue à celle de l'exemple 2, la seule différence est l'équipement de la deuxième cathode qui comporte, ici, une cible en alliage d'indium-étain métallique dans le rapport pondéral 90-10.

Le substrat est un verre flotté coloré du type de celui décrit ci-dessus à l'occasion de la présentation de la figure 3. Son épaisseur est de 3,15 mm et il a subi une trempe thermique dans les conditions habituelles.

La première couche (TiC) est déposée comme dans les exemples précédents mais son épaisseur n'est que de 15 mm. Le dépôt d'ITO s'effectue, lui, différemment. Le mélange argon-oxygène comporte ici, une proportion d'oxygène portée à 25 % la pression qui s'établit est de l'ordre de 8 10⁻³ Torr. On dépose ainsi par pulvérisation cathodique réactive une couche d'ITO dont l'épaisseur est de 15 nm. Il est à noter que pour ce type de dépôts, qui ne jouent aucun rôle dans l'infra-rouge, les conditions stoechiométriques du dépôt sont peu sensibles. L'aspect de la couche ou sa résistance à l'abrasion sont très largement indépendants de celles-ci. L'échantillon terminé a une $T_L$ de 0,58, sa réflexion côté verre, telle qu'on la verra de l'extérieur du véhicule, est $R'_L = 0,09$ et sa transmission énergétique $T_E = 0,41$.

Un tel vitrage conviendrait donc très bien comme vitrage latéral arrière.

Exemple 5

Cet exemple est en tout point identique à l'exemple 4 à l'exception de l'épaisseur de la couche d'ITO qui est portée ici à 25 nm. Les résultats obtenus sont :

$T_L = 0,57$
$R'_L = 0,12$
$T_E = 0,40$

Cet exemple montre l'incidence de l'épaisseur d'ITO sur la réflexion. On a vu précédemment que plus ITO était épais, meilleure était la résistance à l'abrasion. Mais on voit ici que la réflexion, elle, s'accroît et même qu'elle pourrait devenir gênante.

Exemple 6

Ici l'installation de pulvérisation cathodique est équipée comme dans l'exemple 2. Le verre, de même composition qu'à l'exemple 4 a une épaisseur de 4,00 mm. Il est trempé.

La couche de TiC que l'on dépose ici est épaisse, de l'ordre de 35 nm et plus précisément, de 32 nm. Il s'agit en effet d'abaisser fortement la transmission. L'ITO quant à lui est déposé à partir d'une cible d'ITO fritté. L'épaisseur obtenue est de 15 nm.

On obtient ainsi une transmission lumineuse de 0,40, une réflexion lumineuse côté verre de 0,11 et une transmission énergétique très faible de 0,26.

Une telle combinaison est bien adaptée à la fabrication d'une lunette arrière sur une installation de pulvérisation cathodique destinée à déposer des couches sur des vitrages bombés.

En résumé, le tableau suivant présente les caractéristiques énergétiques des vitrages équipant l'habitacle d'une automobile et utilisant pour deux d'entre eux les solutions des vitrages proposés par l'invention.

Le pare-brise feuilleté traditionnel est fait avec le même verre coloré que celui dont la composition est évoquée ci-dessus. Son épaisseur globale est de 5,4 mm : le verre extérieur coloré de 2,1 mm est associé à un verre flotté clair de 2,6 mm.

Le vitrage latéral avant est fait du même verre vert mais avec une épaisseur de 4 mm. Le vitrage latéral arrière est celui de l'exemple 4 et la lunette arrière, le vitrage de l'exemple 6.

|  | $T_L$ | $R'_L$ | $T_E$ |
|---|---|---|---|
| Pare-brise | 0,80 | 0,08 | 0,60 |
| Latéraux avant | 0,72 | 0,07 | 0,46 |
| Latéraux arrière | 0,58 | 0,09 | 0,41 |
| Lunette arrière | 0,40 | 0,11 | 0,26 |

## Revendications

1. Vitrage de protection solaire revêtu d'une couche mince à base de carbure de titane, caractérisé en ce qu'elle est recouverte d'une couche d'oxyde d'indium-étain.

2. Vitrage selon la revendication 1, caractérisé en que le verre support de la couche est un verre coloré dans la masse.

3. Vitrage selon la revendication 1 ou la revendication 2, caractérisé en ce que le verre est trempé.

4. Vitrage selon l'une des revendications 1 à 3, caractérisé en ce que la couche d'oxyde d'indium-étain a une épaisseur inférieure à 50 nm.

5. Vitrage selon la revendication 4, caractérisé en ce que l'épaisseur de la couche d'indium-étain est de l'ordre de 15 nm.

6. Vitrage selon la revendication 1, caractérisé en ce que la couche de carbure de titane a une épaiseur comprise entre 8 et 50 nm.

7. Vitrage selon la revendication 6, caractérisé en ce que l'épaisseur de la couche de carbure de titane est d'environ 15 nm.

8. Vitrage selon la revendication 6, caractérisé en ce que l'épaisseur de la couche de carbure de titane est de l'ordre de 35 nm.

9. Procédé pour préparer une couche de carbure de titane recouverte d'une couche d'oxyde d'indium-étain, caractérisé en ce que la couche de carbure de titane est obtenue par pulvérisation cathodique réactive à l'aide d'une cible de titane en présence d'une atmosphère contenant un hydrocarbure.

10. Procédé selon la revendication 9, caractérisé en ce que la pulvérisation cathodique est du type renforcé par champ magnétique.

11. Procédé selon la revendication 9 ou la revendication 10, caractérisé en ce que l'hydrocarbure est du méthane.

12. Procédé selon la revendication 11, caractérisé en ce que le méthane est dilué dans de l'argon dans une proportion comprise entre 8 et 20 %.

13. Procédé selon la revendication 12, caractérisé en ce que la proportion de méthane est de 14 %.

14. Procédé selon la revendication 9, caractérisé en ce que la puissance appliquée à la cathode est comprise entre 1 et 2 W/cm$^2$.

15. Procédé selon la revendication 9, caractérisé en ce que le dépôt de la couche d'oxyde d'indium-étain est effectué immédiatement après le dépôt de carbure de titane, sans retour à l'atmosphère.

16. Application de vitrages selon l'une des revendications 1 à 8 à la réalisation d'un système de vitrage pour véhicule dans lequel la transmission décroît par étapes d'un vitrage à l'autre, de l'avant vers l'arrière du véhicule.

17. Application selon la revendication 16, caractérisée en ce que la variation de transmission est obtenue par des couches de carbure de titane de plus ou moins grande épaisseur.

18. Application selon l'une des revendications 16 ou 17, caractérisée en ce que la variation de transmission est obtenue par variation de l'épaisseur du verre.

## Patentansprüche

1. Mit einer dünnen Schicht auf Titankarbid-Basis beschichtete Sonnenschutz-Verglasung, **dadurch ge-**

kennzeichnet, daß sie mit einer Indium-Zinn-Oxid-Schicht bedeckt ist.

2. Verglasung nach Anspruch 1, **dadurch gekennzeichnet, daß** das die Schicht tragende Glas ein in der Masse gefärbtes Glas ist.

3. Verglasung nach Anspruch 1 oder 2, **dadurch gekennzeichnet, daß** das Glas vorgespant ist.

4. Verglasung nach einem der Ansprüche 1 bis 3, **dadurch gekennzeichnet, daß** die Dicke der Indium-Zinn-Oxid-Schicht weniger als 50 nm beträgt.

5. Verglasung nach Anspruch 4, **dadurch gekennzeichnet, daß** die Dicke der Indium-Zinn-Schicht ca. 15 nm beträgt.

6. Verglasung nach Anspruch 1, **dadurch gekennzeichnet, daß** die Dicke der Titankarbidschicht zwischen 8 und 50 nm beträgt.

7. Verglasung nach Anspruch 6, **dadurch gekennzeichnet, daß** die Dicke der Titankarbidschicht etwa 15 nm beträgt.

8. Verglasung nach Anspruch 6, **dadurch gekennzeichnet, daß** die Dicke der Titankarbidschicht etwa 35 nm beträgt.

9. Verfahren zur Herstellung einer mit einer Indium-Zinn-Oxid-Schicht bedeckten Titankarbidschicht, **dadurch gekennzeichnet, daß** man die Titankarbidschicht durch reaktive Kathodenzerstäubung mittels einer Titantarget in einer einen Kohlenwasserstoff enthaltenden Umgebung erhält.

10. Verfahren nach Anspruch 9, **dadurch gekennzeichnet, daß** die Kathodenzerstäubung durch ein Magnetfeld verstärkt wird.

11. Verfahren nach Anspruch 9 oder 10, **dadurch gekennzeichnet, daß** der Kohlenwasserstoff Methan ist.

12. Verfahren nach Anspruch 11, **dadurch gekennzeichnet, daß** das Methan in einem Verhältnis zwischen 8 und 20% in Argon verdünnt ist.

13. Verfahren nach Anspruch 12, **dadurch gekennzeichnet, daß** der Methananteil 14% beträgt.

14. Verfahren nach Anspruch 9, **dadurch gekennzeichnet, daß** die auf die Kathode aufgebrachte Leistung zwischen 1 und 2 W/cm$^2$ beträgt.

15. Verfahren nach Anspruch 9, **dadurch gekennzeichnet, daß** die Ablagerung der Indium-Zinn-Oxid-Schicht unmittelbar nach der Ablagerung der Titankarbidschicht, ohne Rückführung an die Atmosphäre, durchgeführt wird.

16. Verwendung von Verglasungen nach einem der Ansprüche 1 bis 8 auf die Ausführung eines Verglasungssystems für Fahrzeuge, bei dem die Transmission stufenweise von einer Verglasung zur anderen, von der Vorderseite des Fahrzeugs zur Rückseite hin, abnimmt.

17. Verwendung nach Anspruch 16, **dadurch gekennzeichnet, daß** die Änderung der Transmission durch mehr oder weniger dicke Titankarbidschichten erhalten wird.

18. Verwendung nach einem der Ansprüche 16 oder 17, **dadurch gekennzeichnet, daß** die Änderung der Transmission durch Veränderung der Glasdicke erreicht wird.

## Claims

1. Solar protection glazing coated with a thin film based upon titanium carbide, characterized in that this film is covered with a film of indium-tin oxide.

2. Glazing according to Claim 1, characterized in that the support glass for the film is a glass coloured within its mass.

3. Glazing according to Claim 1 or Claim 2, characterized in that the glass is toughened.

4. Glazing according to one of Claims 1 to 3, characterized in that the indium-tin oxide film has a thickness less than 50 nm.

5. Glazing according to Claim 4, characterized in that the thickness of the indium-tin oxide film is of the order of 15 nm.

6. Glazing according to Claim 1, characterized in that the film of titanium carbide has a thickness of from 8 to 50 nm.

7. Glazing according to Claim 6, characterized in that the thickness of the titanium carbide film is approximately 15 nm.

8. Glazing according to Claim 6, characterized in that the thickness of the titanium carbide film is of the order of 35 nm.

9. Process for the preparation of a film of titanium carbide, covered with a film of indium-tin oxide, characterized in that the titanium carbide film is produced by reactive cathodic sputtering by means of a titanium target in the presence of an atmosphere containing a hydrocarbon.

10. Process according to Claim 9, characterized in that the cathodic sputtering is of the type which is reinforced by a magnetic field.

11. Process according to Claim 9 or 10, characterized in that the hydrocarbon is methane.

12. Process according to Claim 11, characterized in that the methane is diluted in argon in a proportion of from 8 to 20%.

13. Process according to Claim 12, characterized in that the proportion of methane is 14%.

14. Process according to Claim 9, characterized in that the power applied to the cathode is from 1 to 2 $W/cm^2$.

15. Process according to Claim 9, characterized in that the deposition of the indium-tin oxide film is carried out immediately after the deposition of titanium carbide, without return to the atmosphere.

16. Application of glazings according to one of Claims 1 to 8, to the construction of a glazing system for a vehicle, in which the transmission decreases by steps from one glazing to another, from the front towards the rear of the vehicle.

17. Application according to Claim 16, characterized in that the variation in transmission is obtained by titanium carbide films of greater or lesser thickness.

18. Application according to one of Claims 16 or 17, characterized in that the variation in transmission is obtained by variation in the thickness of the glass.

## FIG_1

## FIG_2

## FIG_3

## FIG_4